# EUROPÄISCHE PATENTANMELDUNG

(11) **EP 1 848 188 A1**
(43) Veröffentlichungstag der Anmeldung: **24.10.2007**
(21) Anmeldenummer: 06112877.3
(22) Anmeldetag: 21.04.2006
(51) Int. Cl.: H04M 3/22, H04M 7/00

(54) **Richterliches Mithören bei Peer-to-peer Netzen**

(71) Anmelder: NOKIA SIEMENS NETWORKS GMBH & CO. KG, 81541 München (DE)
(72) Erfinder: Vizaei, Mohammad, 1220, Wien (AT)
(74) Vertreter: Berg, Peter

(57) **Zusammenfassung**

Die Erfindung betrifft ein Verfahren zum richterlichen Mithören bei Peer-to-peer Netzen, bei dem zu überwachende Teilnehmer markiert werden,und bei dem weiterhin bei Aufbau einer Peer-to-peer Kommunikation mit einem markierten Teilnehmer die Verbindung über einen Überwachungsserver umgeleitet wird und mit einem geeigneten Dienst des Überwachungsservers der Zugriff auf die Kommunikationsdaten erfolgt.

Damit wird auf einfache Weise die Forderung des Richterlichen Mithörens verwirklicht.

## Beschreibung

### Technisches Gebiet

Die Erfindung betrifft ein Verfahren zum richterlichen Mithören bei Peer-to-peer Netzen.

### Stand der Technik

Peer-to-peer Netze sind Netzwerke ohne zentrale Zugriffskontrolle, bei denen alle Teilnehmer (Peers) gleichberechtigt agieren. Eine Verbindung besteht dabei im Gegensatz zu Client-Server Systemen direkt zwischen zwei Teilnehmern ohne Zwischenschaltung eines Netzwerkservers. Der Verzicht auf zentrale Server führt zu einer Reduktion des Datenverkehrs im Netz, ermöglicht auf einfache Weise die dezentrale Speicherung großer Datenmengen und erhöht die Ausfallsicherheit des Netzes. Nachteilig an Peer-to-peer Netzen wird neben den hohen Anforderungen an die Leistung der Endgeräte oftmals auch die fehlende Möglichkeit gesehen, eine darauf basierende Kommunikation zu überwachen.

Diese Überwachung d.h. das Abhören von Telefongesprächen oder aber auch das Mitlesen von E-Mails, Kurzmittelungen (so genannte SMS), Faxe, etc. mitgelesen werden auf der Basis gesetzlicher Bestimmungen und/oder Verordnungen ist eine Forderung vieler Statten an die Betreiber von Kommunikationsnetzen. Damit sollen üblicherweise auf Basis einer richterlichen Entscheidung Straftaten verhindert werden.

Mit einem englischen Fachausdruck, der so genannten Lawful Interception (LI) wird dabei ein Sicherheitsprozess bezeichnet. Durch diesen wird von einem Betreiber eines Telekommunikationsnetzes oder einem Anbieter von Telekommunikationsdiensten (z.B. Internet-Provider, IP-Telefonie-Anbieter, etc.) einer zur Überwachung berechtigten staatlichen Stelle oder Behörde (z.B. Polizei, Zollfahndung, etc.), welche allgemein auch als Law Enforcement Agency (LEA) bezeichnet wird, Zugriff auf Telekommunikationsvorgänge und -inhalte (z.B. Telefongespräche, E-Mail- oder Faxverkehr, verbindungsrelevante Daten wie z.B. gewählte Rufnummer, Rufnummer eines eingehenden Anrufs, etc.) eines bestimmten Teilnehmers ermöglicht.

Dabei wird zu diesem Zweck im Telekommunikationsnetz eine so genannte Lawful Interception-Schnittstelle für eine Datenübertragung zwischen dem Telekommunikationsnetzbetreiber oder Telekommunikationsdiensteanbieter und der überwachenden Stelle oder Behörde eingerichtet. Über diese Lawful Interception-Schnittstelle werden dann in einem Überwachungsfall beispielsweise Daten - wie z.B. Anrufinhalte, Faxdaten, verbindungsrelevante Daten, Inhalte von E-Mails oder Kurzmeldungen - meist in Echtzeit aus dem Telekommunikationsnetz zu einer Überwachungseinrichtung der gesetzliche ermächtigten Stelle oder Behörde übertragen.

Zur einfacheren Realisierung von Lawful Interception und um auch eine grenzüberschreitende - z.B. europaweite - Überwachung von Telekommunikationsvorgängen und -inhalten zu ermöglichen, sind für Lawful Interception und die entsprechenden Schnittstellen Standards und technische Spezifikationen entwickelt worden - wie z.B. ES 201 671 Telecommunications Security; Lawful Interception (LI); Handover Interface for Lawful Interception of Telecommunications Traffic; TS 101 232 Telecommunications Security; Lawful Interception (LI); Handover Specification for IP delivery, etc., welche vom Technical Committee on Lawful Interception (TC LI) des European Telecommmunications Standards Institute (ETSI) publiziert worden sind. Diese von der ETSI veröffentlichten Standards und technischen Spezifikationen für Lawful Interception werden hauptsächlich in Europa, in großen Teilen von Asien und teilweise auch in Australien verwendet. Von diesen Standards werden nicht nur sehr detailliert die Architektur eines Systems sowie die Schnittstellen für Lawful Interception beschrieben, sondern auch telekommunikationsnetz-spezifische Protokollanforderungen und Prozeduren, welche notwendig sind, um Daten der Telekommunikationsvorgänge eines überwachten Teilnehmers vom Telekommunikationsnetzbetreiber bzw. Anbieter von Telekommunikationsdiensten an die gesetzlich zur Überwachung ermächtigte Stelle oder Behörde zu übertragen.

In den USA wurden die Grundlagen für Lawful Interception im so genannten Communications Assistance for Law Enforcement Act (CALEA) definiert und durch Veröffentlichungen von verschiedenen Komitees der Alliance for Telecommunications Industry Solutions (ATIS) - wie PTSC LAES (Packet Technologies and Systems Committee Lawfully Authorized Electronic Surveillance) oder WTSC LI (Wireless Technologies and Systems Committee Lawful Intercept) - für verschiedenen Telekommunikationsnetztypen wie z.B. Mobilfunknetze, IP-basierte Netze, etc. ergänzt.

### Darstellung der Erfindung

Der Erfindung liegt die Aufgabe zugrunde, ein Verfahren anzugeben, mit dem richterliches Mithören bei Peer-to-peer Netzen verwirklicht werden kann.

Erfindungsgemäß geschieht dies mit einem Verfahren der eingangs genannten Art, bei dem zu überwachende Teilnehmer markiert werden, bei dem weiterhin bei Aufbau einer Peer-to-peer Kommunikation mit einem markierten Teilnehmer die Verbindung über einen Überwachungsserver umgeleitet wird und bei dem mit einem geeigneten Dienst des Überwachungsservers der Zugriff auf die Kommunikationsdaten erfolgt.

Die Art und Weise der Markierung des Teilnehmers hängt dabei von der Architektur des Netzes ab. Bei einer zentralisierten Architektur des Peer-to-peer Netzes, bei der ein oder mehrere Server für die Suche nach Daten verantwortlich sind, erfolgtdie Markierung des Teilnehmers in vorteilhafter Weise in den Suchservern.

In dezentralen Peer-to-peer Netzen, bei denen auf jegliche zentralisierten Einrichtungen verzichtet wird und keinerlei Hierarchie im Netz vorliegt, erfolgt in zweckmäßiger Weise die Markierung in der Applikationssoftware jedes Teilnehmers selbst.

Bei den sogenannten Super Peer-to-peer Netzen bieten sich die Super-Peers zur Verwaltung der Markierung für das Abhören an.

### Kurzbeschreibung der Zeichnung

Die Erfindung wird anhand von zwei Figuren näher erläutert, welche beispielhaft den Ablauf eines erfindungsgemäßen Nachrichtenaustauschs zum richterlichen Mithören in einem schematisch dargestellten Peer-to-peer Netz zeigen.

### Ausführung der Erfindung

Das in den Figuren schematisch dargestellte Peer-to-peer Netz umfasst einen ersten Teilnehmer A und einen zweiten Teilnehmer B, sowie einen Überwachungsserver MID-Server. In dem vorliegenden Beispiel soll auf der Grundlage einer richterlichen Anordnung die Kommunikation des zweiten Teilnehmers B überwacht werden.

Dazu wird mit geeigneten Mitteln der zweite Teilnehmer markiert, d.h. seine Daten in der verteilten Peer-to-peer Datenbasis werden entsprechend ergänzt.

Es ist dabei für das Wesen der Erfindung unerheblich, welche konkrete Netzwerkstruktur zum Einsatz kommt.

So kann bei einer zentralisierten (hybriden) Architektur des Peer-to-peer Netzes, bei der ein oder mehrere Server für die Suche nach Daten verantwortlich sind, die Markierung des Teilnehmers in den Suchservern erfolgen.

Bei der zweiten Kategorie von Peer-to-peer Netzen, den dezentralen (puren) Peer-to-peer Netzen, bei denen auf jegliche zentralisierten Einrichtungen verzichtet wird und keinerlei Hierarchie im Netz vorliegt, erfolgt die Markierung in der Applikationssoftware jedes Teilnehmers selbst.

Die dritte Kategorie von Peer-to-peer Netzwerkarchitekturen, die so genannten Super Peer-to-peer Netze stellt eine Mischform der beiden anderen Netzformen dar. In dieser Archtitektur bilden so genannte Super-Peers mit verbundenen "Clients" cluster, wobei der Super-Peer Metainformationen über die angeschlossenen Clients verwaltet. Bei dieser Architektur bietet sich der Super-Peer als Träger der Markierung für das Abhören an.

Beim beispielhaften Aufbau einer Datenverbindung zu einem solcherart markierten zweiten Teilnehmer B wird also die entsprechend der Netzwerkarchitektur gespeicherte Markierung im Rahmen des Verbindungsaufbaues zwischen dem rufenden ersten Teilnehmer A und dem gerufenen zu überwachenden zweiten Teilnehmer B erkannt und daraufhin die Datenverbindung nicht - wie bei Peer-to-peer Netzen allgemein üblich, direkt zwischen den beiden Teilnehmern A, B aufgebaut, sondern über einen Überwachungsserver MID-Server umgeleitet.

Der Überwachungsserver MID-Server beinhaltet nun die Mittel zur Bereitstellung einer Überwachungsschnittstelle beispielsweise gemäß ES 201 671 Telecommunications Security; Lawful Interception (LI); Handover Interface for Lawful Interception of Telecommunications Traffic; TS 101 232 Telecommunications Security; Lawful Interception (LI); Handover Specification for IP delivery, etc., welche vom Technical Committee on Lawful Interception (TC LI) des European Telecommmunications Standards Institute (ETSI) publiziert worden sind.

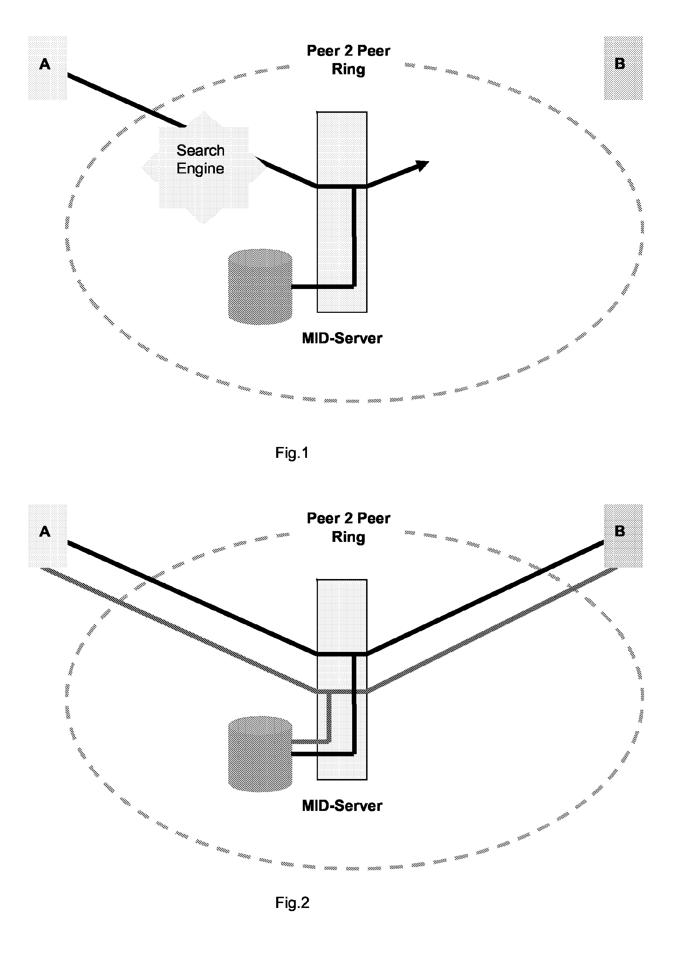

Figur 2 zeigt schematisch die Situation nach dem Verbindungsaufbau während des Kommunikationsvorganges, also beispielsweise eines Telefongespräches, eines Chats etc.

Der vollständige Datenfluss erfolgt dabei über den Überwachungsserver MID-Server, sodass über die Überwachungsschnittstelle die Daten entsprechend überwacht werden können.

## Patentansprüche

1. Verfahren zum richterlichen Mithören bei Peer-to-peer Netzen **dadurch gekennzeichnet, dass** zu überwachende Teilnehmer markiert werden, dass weiterhin bei Aufbau einer Peer-to-peer Kommunikation mit einem markierten Teilnehmer die Verbindung über einen Überwachungsserver umgeleitet wird und dass mit einem geeigneten Dienst des Überwachungsservers der Zugriff auf die Kommunikationsdaten erfolgt.

2. Verfahren nach Anspruch 1, **dadurch gekennzeichnet, dass** bei einer zentralisierten Architektur des Peer-to-peer Netzes, bei der ein oder mehrere Server für die Suche nach Daten verantwortlich sind, die Markierung des Teilnehmers in den Suchservern erfolgen.

3. Verfahren nach Anspruch 1, **dadurch gekennzeichnet, dass** bei dezentralen Peer-to-peer Netzen, bei denen auf jegliche zentralisierten Einrichtungen verzichtet wird und keinerlei Hierarchie im Netz vorliegt, die Markierung in der Applikationssoftware jedes Teilnehmers selbst erfolgt.

4. Verfahren nach Anspruch 1, **dadurch gekennzeichnet, dass** bei Super Peer-to-peer Netzen die Super-Peers die Markierung für das Abhören verwalten.
